# EUROPEAN PATENT SPECIFICATION

(11) **EP 1 378 685 B1**
(45) Date of publication and mention of the grant of the patent: **04.10.2006**
(21) Application number: 03254205.2
(22) Date of filing: 02.07.2003
(51) Int. Cl.: F16H 31/00, F16D 41/02, F16D 63/00, F16H 25/20

(54) **No-back device**
Anti-Rückwärts Vorrichtung
Mécanisme anti-entraînement arrière

(30) Priority: 06.07.2002 GB 0215727
(43) Date of publication of application: 07.01.2004
(73) Proprietor: Goodrich Actuation Systems Ltd, Luton, Bedfordshire LU1 3LU (GB)
(72) Inventor: Darby, Jonathan Alan, Field House, Staffordshire, ST5 2HB (GB); Adams, Bruce John, Wolverhampton, West Midlands, WV10 6SB (GB)
(74) Representative: Carpenter, David

(56) References cited:
- US-A- 4 762 205
- US-A- 5 582 390

## Description

### Technical Field

The present invention relates to a no-back device suitable for use with a linear actuator, such as a ball-screw actuator or the like.

### Background Art

The principle of operation of so-called "no-back" devices is known in the art, for example in connection with linear actuators such as ball-screw actuators for positioning a flight control surface of an aircraft. The role of a no-back device is primarily to facilitate elimination of the effect of any forces tending to aid or oppose input torque applied to a screw of the actuator with a view to substantially preventing such forces back-driving the screw shaft.

Conventional no-back devices comprise a ratchet disk or wheel, connectable for rotation with the screw shaft of the actuator, and having a number of teeth disposed around the circumference of the disk. One or more pawl members are arranged to selectively engage with the teeth, thereby to permit the disk, and hence the screw shaft, to be rotated in a first direction but to prevent rotation of the disk in the opposite direction.

A concern with existing designs of no-back devices is that the quality of the materials used to manufacture the components of the device, in particular those used for the ratchet disk and pawl members, could potentially be defective.

Such defective materials could not usually be detected prior to installation of the device and would come to light only when the device failed, most likely through the stripping of the teeth from the ratchet disk or the buckling of the pawl members.

Failure of this nature of the no-back device is potentially extremely dangerous since the screw shaft can then be back-driven by the aerodynamic forces acting on the flight surface. The flight surfaces cannot be held in position as desired and may flutter causing the aircraft to become unstable.

Owing to the demand for increased safety of aircraft and their mechanical components, there is a requirement to build redundancy features into such actuators and no-back devices to reduce the likelihood and effect of their failure.

US 5582390, which shows all the features of the preamble of independent claim 1, describes a bi-directional no-back device including a pair of ratchet plates designed to prevent rotation in opposite rotational directions.

### Disclosure of the Invention

According to one aspect of the invention, therefore, there is provided a no-back device comprising first and second ratchet members connectable to a rotating member for rotation therewith and at least one pawl member, engagable with at least one of said ratchet members, characterised in that said first and said second ratchet members are formed from respective materials having different chemicals and/or physical properties, and in that the first and second ratchet members are fixedly joined together to prevent relative rotation therebetween.

By employing two ratchet members which are made of different materials or similar materials which have been subjected to different treatment processes, the likelihood of both disks suffering a latent failure are considerably reduced.

Preferably, the first and second ratchet members are arranged for rotation in the same direction. Advantageously, the at least one pawl member is arranged to permit rotation of the first and second ratchet members in one direction but to substantially prevent rotation of at least one of the ratchet members in the opposite direction.

Advantageously, the first and second ratchet members have respective interlocking means for interlocking said ratchet members together, thereby to prevent said relative rotation. Preferably, one of said ratchet members is provided with one or more projections on a surface thereof while the other ratchet member is provided with one or more corresponding indentations for engagement with said one or more projections.

The projections and indentations serve to interlock the first and second ratchet members together to substantially prevent relative rotation therebetween. Moreover, by providing one of the ratchet members with one or more projections and the other ratchet member with one or more corresponding indentations, it is possible to ensure that two like disks are not capable of being used together. This further improves reliability.

Preferably, the no-back device includes two pawl members, each being engagable with at least one of the ratchet members. Conveniently, a first one of said pawl members is formed from a first material while a second one of said pawls is formed from a second material having different physical and/or chemical properties from the first material.

Preferably, said pawl members are mounted to a fixed part of the no-back device by means of a spindle or the like. More preferably, the spindle of one pawl member is a different size or shape from that of the other pawl member.

Advantageously, the different mounting arrangements for the pawl members ensure that two like pawls cannot be used together.

Advantageously, the first ratchet member is angularly offset from the second ratchet member. Conveniently, the offset angle is approximately 1°. This ensures that, during normal operation, the or each pawl member is engagable with only the first of said ratchet members. Should said first ratchet member suffer wear or breakage, the or each pawl member will become engagable with the second ratchet member which has suffered no wear or breakage.

Preferably there is provided a sensor for providing a warning signal that the or each pawl is cooperating with the second ratchet member.

Conveniently said sensor includes a strain gauge coacting with said second ratchet member.

Alternatively said sensor includes an electrical switch operable by said second ratchet member when said second ratchet member coacts with the or each pawl.

### Brief Description of the Drawings

The present invention will now be described, by way of example only, with reference to the accompanying drawings in which:
Figure 1 is a perspective view of a preferred form of no-back device according to the invention,
Figure 2 is a section through a ball-screw actuator incorporating the no-back device of Figure 1,
Figure 3 is an enlarged view of part of the actuator of Figure 2,
Figure 4 is a transverse section through the actuator of Figure 2,
Figure 5 is a section along the line F-F in Figure 4,
Figure 6 is a section along the line G-G in Figure 4,
Figure 7 is a view similar to Figure 1 showing a modification, and,
Figure 8 is a diagrammatic cross-sectional view of part of Figure 7.

### Preferred Mode of Carrying Out the Invention

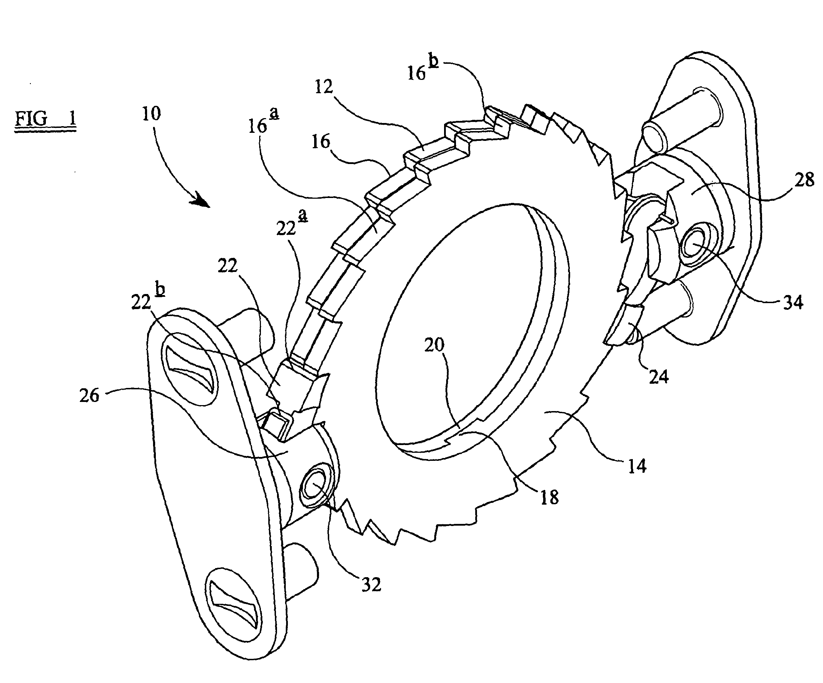

Referring to Figure 1, a preferred form of no-back device according to the invention is shown generally at 10. The no-back device 10 comprises first and second ratchet members in the form of annular disks or wheels 12, 14. Each ratchet member 12, 14 has a plurality of circumferential teeth 16, each tooth having a leading facet 16a, extending generally tangential to the local circumference of the wheel, and a radially-directed trailing facet 16b.

The first and second ratchet members 12, 14 are fixedly joined together such that relative rotation therebetween is hindered or substantially prevented. In one embodiment, the first and second ratchet members 12, 14 are adhered together using a suitable adhesive but may additionally or alternatively be connected together by mechanical means such as rivets, bolts or the like.

In a preferred embodiment, shown in Figure 1, the second ratchet member 14 is provided on one surface thereof with an upstanding projection 18 which is arranged, in use, to engage in a corresponding indentation 20 formed in the opposing surface of the first ratchet member 12. A plurality of such indentations/projections may be formed on the abutting faces of the first and second ratchet members 12, 14 respectively. Advantageously, however, only the first ratchet member 12 is provided with the indentations whilst only the second ratchet member 14 is provided with the projections. The advantages of this are explained below.

It will be understood from the foregoing description and the drawings that the teeth on the first and second ratchet members are unidirectional, i.e. they are oriented in the same direction for rotation of the first and second ratchet members in one direction only. The no-back device includes first and second pawl members 22, 24 pivotally mounted by means of respective spindles 32, 34 to mounting points 26, 28 connected to a fixed part of the no-back device 10. The pawl members 22, 24 are arranged to engage with the circumferential teeth 16 of the first and second ratchet members 12, 14 in the manner of conventional ratchet and pawl mechanisms.

Specifically, the first and second pawl members 22, 24 are arranged to permit rotation of the first and second ratchet members 12, 14 in one direction but to substantially prevent rotation in the opposite direction. Rotation of the first and second ratchet members 12, 14 in the first direction is permitted by virtue of pivotal movement of the pawl members causing them to ride over the circumferential teeth 16. Rotational movement of the first and second ratchet members 12, 14 in the opposite direction causes the pawl members 22, 24 to engage with and abut the trailing facet 16b of respective teeth 16.

Importantly, the first and second ratchet members 12, 14 are formed from materials having different chemical, mechanical and/or physical properties. For example, the first ratchet member 12 may be formed from steel which is AMS 6260 Carburized whilst the second ratchet member 14 may be formed from steel which is S82 Carburized.

The use of different materials for each of the ratchet members 12, 14, or similar materials having different properties, or materials which have been subjected to different treatment processes, ensures that any manufacturing problems affecting one of the ratchet members, which may make it insufficiently hard or susceptible to wear or fatigue, are highly unlikely to be experienced by the other ratchet member. Thus, for example, if during manufacture of the ratchet members, a first batch is produced with a mechanical fault or other material defect, the assembled no-back device is extremely unlikely to fail since the other ratchet member will not come from the same batch. Furthermore, the provision of the indentations 20 on the first ratchet member 12 and the corresponding projections 18 on the second ratchet member 14 ensure that two like ratchet members cannot be assembled together to form the no-back device.

In addition, the pawl members 22, 24 may also be formed from materials having different chemical, mechanical and/or physical properties as with the ratchet members 12, 14. For example, the first pawl member 22 may be formed from steel which is AMS 6260 Carburized while the second pawl member 24 may be formed from steel which is S82 Carburized. Again, the use of pawl members being formed from different materials, or from similar materials having different properties or having been subjected to different treatment processes, ensures that the likelihood of failure of both pawl members 22, 24 owing to defective materials or manufacturing processes is minimised.

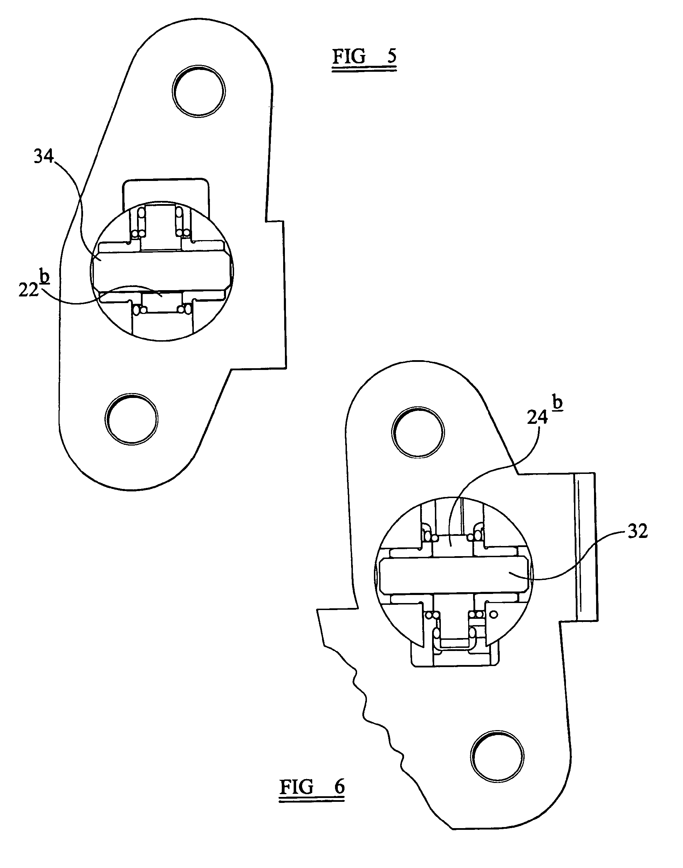

To ensure that the use of two like pawls in the no-back device is not possible, the spindle 32 on which the first pawl 22 is mounted is a different size and/or shape to the spindle 34 on which the second pawl member 24 is mounted. This is more clearly shown in Figures 5 and 6. Thus, the first pawl member 22 cannot be accidentally mounted to the second mounting point 28 whilst the second pawl member 24 cannot be mounted to the first mounting point 26.

As illustrated in Figure 1, the first and second ratchet members 12, 14 are joined together such that they are angularly offset by a relatively small amount. The amount of offset can be selected as desired but is preferably less than 5° and more preferably approximately 1° or less, for example down to 0.3°. In particular, the amount of angular offset of the first and second ratchet members 12, 14 must not be great enough to cause the pawl members to wear out the teeth of the lagging ratchet member.

The provision of angularly offset ratchet members 12, 14 ensures that, during normal operation, only the lagging ratchet member, namely the second ratchet member 14 in Figure 1, is engaged by the pawl members 22, 24. Since the first ratchet member 12 which angularly leads the second ratchet member 14 is not engaged by the pawl members 22, 24, it is therefore maintained in a full, unworn working condition. Should the second ratchet member 14 fail or wear through prolonged use then the unworn first ratchet member 12 will ensure that the no-back device does not fail completely.

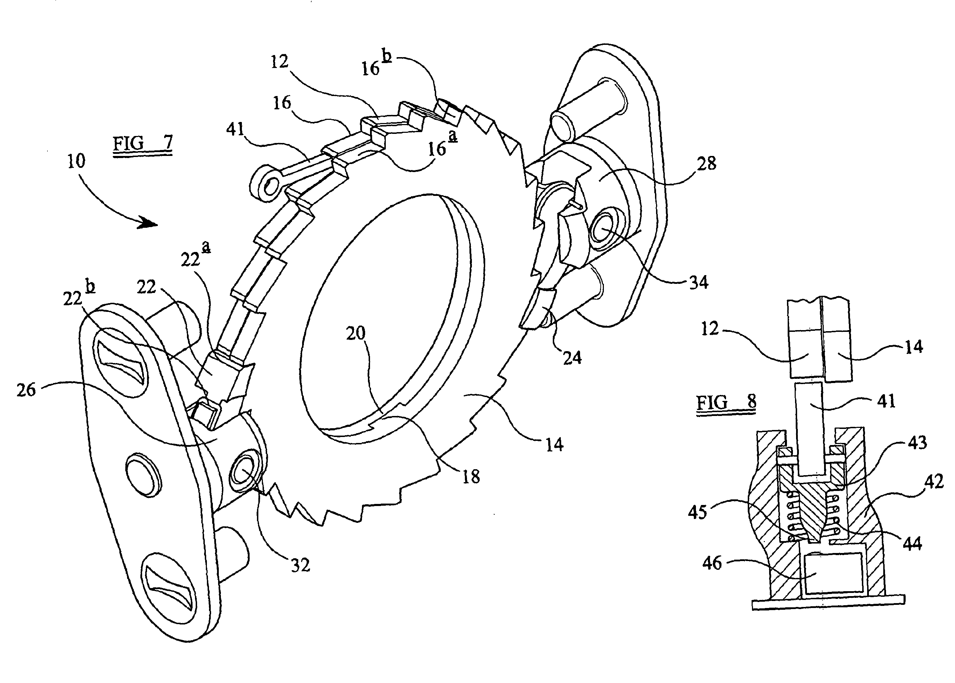

It is desirable to provide an indication to the pilot, or to a maintenance engineer, that partial failure has occurred and that the pawl members 22, 24 are co-operating with the ratchet member 12, and not the ratchet member 14. Figure 7 and 8 illustrate an arrangement where such an operational mode of the no-back device can be detected. The device is provided with a detector finger 41 which rides on the periphery of the ratchet member 12, and does not in any way co-operate with the ratchet member 14. The finger 41 is pivotally mounted at one end in a manner generally similar to the pivotal mounting of the pawls 22, 24 and its opposite, free end co-operates with the facets of the ratchet member 12. The angular position of the finger 41 around the periphery of the ratchet member 12 is such that the free end of the finger will be engaged by a facet 16b of the ratchet member 12 when the ratchet members 12, 14 are in a rotated position such that the pawls 22, 24 would have co-operated with a facet 16b of the ratchet member 14. However, it will be recognised that by virtue of the angular offset of the ratchet members 12 and 14, when sufficient reverse rotation of the ratchet members 12, 14 occurs to permit the pawls 22, 24 to co-operate with a facet 16b of the ratchet member 12 then the finger 41 will already have engaged a facet 16b of the ratchet member 12 and will have been subject to a longitudinal loading by virtue of the reverse rotation of the ratchet member 12.

As is apparent from Figure 8, the finger 41 is pivotally mounted in a fixed housing 42 by means of an intermediate carrier 43 slidably mounted in the housing 42. The carrier 43 is spring urged, by a helical compression spring 44 to a rest position relative to the housing 42 and in that rest position an innermost end region 45 of the carrier 43 is spaced from an electrical switch 46 conveniently in the form of a micro-switch. The reverse rotation of the ratchet member 12 which is permitted by the angular displacement of the ratchet members 12, 14, before the pawls 22, 24 arrest the ratchet members, drives the finger 41 rearwardly moving the carrier 43 against the action of the spring 44 so that the innermost end 45 of the carrier 43 engages, and operates, the actuation member of the switch 46. Thus the reverse rotation of the ratchet members in the first failure mode, where the ratchet member 12 co-operates with the pawls 22, 24 rather than the ratchet member 14 co-operating with the pawls, is detected by operation of the electrical switch 46 which can be used to provide a warning signal to the pilot of the aircraft, or to provide a warning message in an electronic maintenance log accessible by a maintenance engineer, or both.

In an alternative arrangement the finger 41 rather than operating a switch 46 operates a strain gauge, which detects the increased loading on the finger 41 during reverse rotation of the ratchet member 12, and similarly provides an output signal indicative of the fact that the device is operating in a first failure mode.

As best illustrated in Figure 1, the pawl members 22, 24 are asymmetrical about their longitudinal axis, having a generally L-shaped form. Specifically, each pawl 22, 24 has an engaging portion 22a which engages the teeth 16 of the first and second ratchet members 12, 14. The engaging portion 22a is of greater width than a mounting portion 22b of the pawl member through which the spindle 32 passes. The pawl member 22 is mounted such that the region of the engaging portion 22a of the pawl member 22 which engages with the teeth of the second ratchet member 14 is substantially axially aligned with the mounting portion 22b of the pawl member 22. This is to ensure that the load path through the pawl member 22, in use, is directed substantially through the full length of the pawl member to minimise the likelihood of fatigue.

The region of the engaging portion 22a of the pawl member 22 which is arranged for engagement with the teeth of the first ratchet member 12 is axially offset from the mounting portion 22b of the pawl member 22. This is not considered disadvantageous since the first ratchet member 12 is effectively a back-up mechanism for the second ratchet member 14. Moreover, the L-shaped pawl member 22 reduces weight compared with a pawl member having a constant thickness. The other pawl member 24 is similarly shaped and arranged.

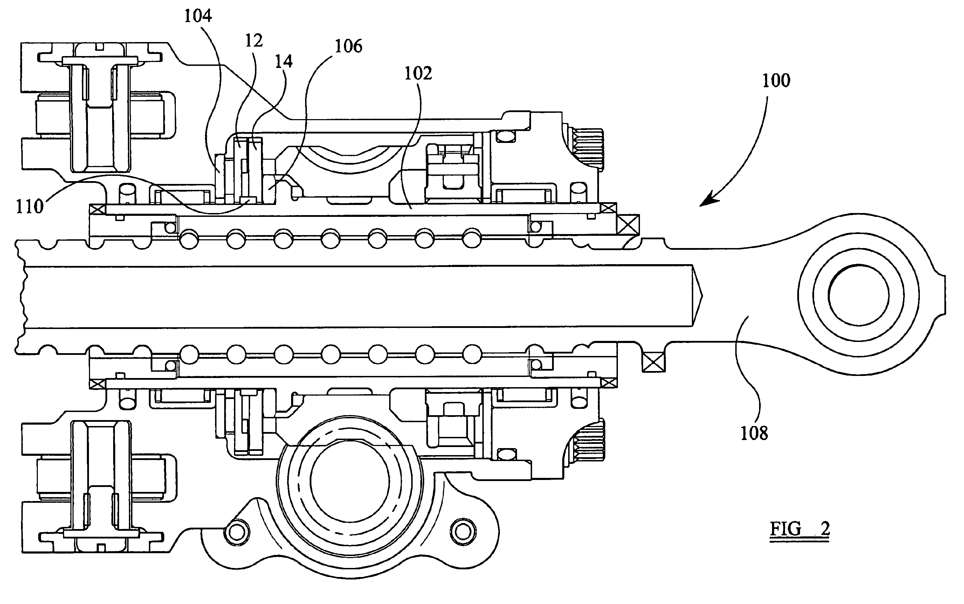

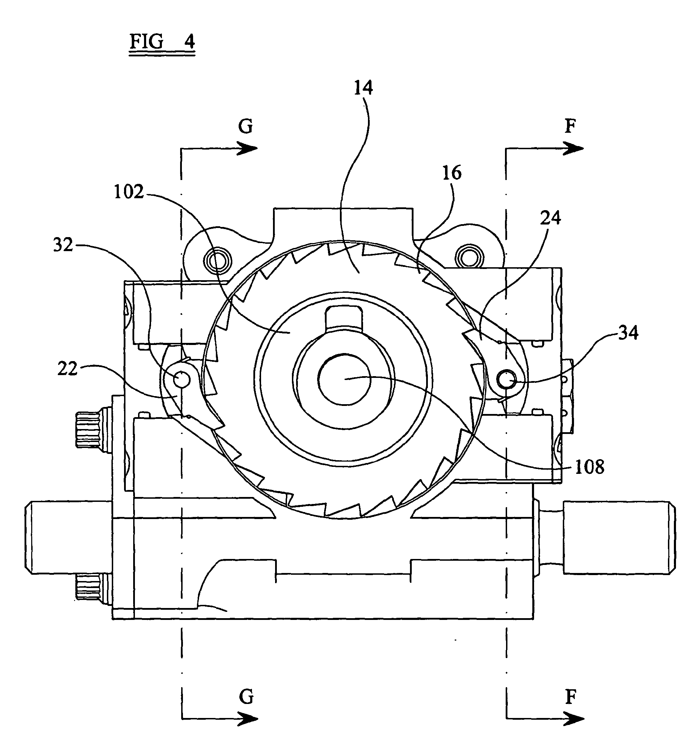

Referring to Figures 2 to 4, which illustrate sections through a ball-screw actuator 100 incorporating the no-back device of the invention. The first and second ratchet members 12, 14 are supported on a rotating shaft or ballnut 102 of the ball-screw actuator for rotation therewith by means of a thrust bearing 104 disposed on one side thereof and a friction disk 106 disposed on the other side thereof and fixedly connected to the ballnut 102.

The ballnut 102 is driven for rotation by an associated drive motor of known form and the arm 108 is coupled in known manner to, for example, a control surface of the aircraft. In use, rotation of the ballnut 102 in one direction causes a linear movement of an actuating arm 108 in an "extend" direction, whilst rotation of the ballnut 102 in the opposite direction causes linear movement of the actuating arm in a "retract" direction.

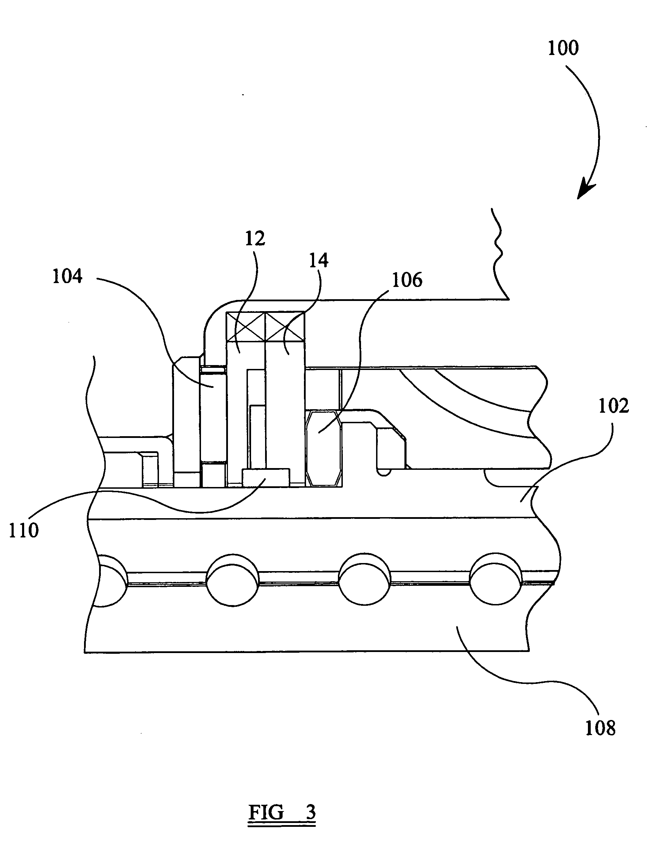

In normal operation, when the ballnut 102 is rotated to extend the arm 108, the ratchet members 12, 14 are free to rotate with the ballnut 102, together with the thrust bearing 104 and the friction disk 106 as the pawl members 22, 24 engage with the teeth of the ratchet members 12, 14 in such a way as to permit the ratchet members 12, 14 to ride over the pawl members 22, 24. The actuating arm 108 is driven to the right in Figure 3 extending its associated control surface.

When a compressive load is applied to the actuating arm, for example due to external aerodynamic forces urging the associated control surface towards a retracted (rest) position, the friction disk 106 is pressed towards the thrust bearing 104 gripping the ratchet wheels 12, 14 between the friction disk and the thrust bearing so that frictional force between the disk 106 and the ratchet member 14 prevents relative rotation between parts 102, 104, 12, 14, and 106. Thus the ratchet members are constrained to rotate with the ballnut, but immediately there is rotation in the reverse direction, the ratchet members 12, 14 lock against the pawls so that rotation of the ratchet members is prevented. Thus retraction of the actuator under the compressive load is prevented.

When it is required to retract the actuator and its associated control surface the actuator drive motor is operated in the reverse direction so that the ballnut 102 is driven in the reverse direction, (i.e. to move the actuating arm 108 to the left). As they start to rotate with the ballnut in this direction, the ratchet members 12, 14 lock against the pawls so that rotation of the ratchet members is prevented. The friction disk 106 will be in contact with the ratchet member 12 but the torque provided by the drive motor overrides the friction between the friction disk 106 and the ratchet member, and bearings 110 mounted on the ballnut 102 permit relative movement between the arrangement of the ballnut 102, the thrust bearing 104 and the friction disk 106, and the locked ratchet members 12, 14, so that the drive motor drives the arm 108 in the retract direction.

It will be understood that the number of pawl members can be selected as desired. Also, the choice of materials for the ratchet members and the pawl members can be selected as desired but, importantly, they should be formed from materials having different properties.

It will be understood by those skilled in the art that the no-back device of the present invention provides a simple and effective improvement to the reliability of existing no-back devices which entails minimum weight increase and improved ease of manufacturing.

## Claims

1. A no-back device comprising first and second ratchet members (12, 14) connectable to a rotating member for rotation therewith and at least one pawl member (22, 24), engagable with at least one of said ratchet members, and **characterised in that** said first and said second ratchet members are formed from respective materials having different chemical and/or physical properties, the first and second ratchet members (12, 14) being fixedly joined together to prevent relative rotation therebetween.

2. A no-back device as claimed in Claim 1 **characterised in that**, said at least one pawl member (22, 24) is arranged to permit rotation of the first and second ratchet members in one direction but to substantially prevent rotation of at least one of the ratchet members in the opposite direction.

3. A no-back device as claimed in Claim 1 or Claim 2 **characterised in that**, the first and second ratchet members (12, 14) have respective interlocking means (18, 20) for interlocking said ratchet members together, thereby to prevent said relative rotation.

4. A no-back device as claimed in Claim 3 **characterised in that**, one of said ratchet members is provided with one or more projections (18) on a surface thereof while the other ratchet member is provided with one or more corresponding indentations (20) for engagement with said one or more projections.

5. A no-back device as claimed in any one of the preceding claims **characterised in that**, the no-back device includes two pawl members, each being engagable with at least one of the ratchet members.

6. A no-back device as claimed in claim 5 **characterised in that**, a first one of said pawl members is formed from a first material while a second one of said pawls is formed from a second material having different physical and/or chemical properties from the first material.

7. A no-back device as claimed in claim 6 **characterised in that**, said pawl members are mounted to a fixed part of the no-back device by means of a spindle or the like and the spindle of one pawl member is a different size or shape from that of the other pawl member.

8. A no-back device as claimed in any one of the preceding claims **characterised in that**, the first ratchet member (12) is angularly offset from the second ratchet member(14).

9. A no-back device as claimed in claim 8 including a sensor (41) for providing a warning signal that said pawl is cooperating with the first ratchet member.

10. A no-back device as claimed in claim 9 **characterised in that**, said sensor includes a strain gauge coacting with said first ratchet member.

11. A no-back device as claimed in claim 9 **characterised in that**, said sensor includes an electrical switch (46) operable by said first ratchet member when said first ratchet member coacts with said pawl.

## Patentansprüche

1. Rückwärtsbewegungsfreie Vorrichtung, die ein erstes und ein zweites Klinkenradelement (12, 14) umfasst, die sich mit einem Drehelement zur Drehung mit demselben verbinden lassen sowie mindestens ein Sperrklinkenelement (22, 24), das sich an mindestens einem der Klinkenradelemente in Eingriff bringen lässt, **dadurch gekennzeichnet, dass** das erste und das zweite Klinkenradelement aus jeweiligen Werkstoffen geformt werden, die verschiedene chemische und/oder physikalische Eigenschaften aufweisen, wobei das erste und das zweite Klinkenradelement (12, 14) fest aneinander gefügt werden, um eine Relativdrehung zwischen denselben zu verhindern.

2. Rückwärtsbewegungsfreie Vorrichtung nach Anspruch 1, **dadurch gekennzeichnet, dass** das mindestens eine Sperrklinkenelement (22, 24) angeordnet ist, um die Drehung des ersten und des zweiten Klinkenradelementes in einer Richtung zuzulassen, aber im Wesentlichen die Drehung von mindestens einem der Klinkenradelemente in der entgegengesetzten Richtung zu verhindern.

3. Rückwärtsbewegungsfreie Vorrichtung nach Anspruch 1 oder Anspruch 2, **dadurch gekennzeichnet, dass** das erste und das zweite Klinkenradelement (12, 14) jeweilige Verriegelungsmittel (18, 20) aufweisen, um die Klinkenradelemente aneinander zu verriegeln, um **dadurch** die Relativdrehung zu verhindern.

4. Rückwärtsbewegungsfreie Vorrichtung nach Anspruch 3, **dadurch gekennzeichnet, dass** eines der Klinkenradelemente mit einer oder mehreren Auskragungen (18) auf einer Fläche desselben versehen ist, während das andere Klinkenradelement mit einer oder mehreren korrespondierenden Einkerbungen (20) für den Eingriff in die eine oder die mehreren Auskragungen versehen ist.

5. Rückwärtsbewegungsfreie Vorrichtung nach einem der vorhergehenden Ansprüche, **dadurch gekennzeichnet, dass** die rückwärtsbewegungsfreie Vorrichtung zwei Sperrklinkenelemente umfasst, wobei sich jedes mindestens an einem der Klinkenradelemente in Eingriff bringen lässt.

6. Rückwärtsbewegungsfreie Vorrichtung nach Anspruch 5, **dadurch gekennzeichnet, dass** ein erstes der Sperrklinkenelemente aus einem ersten Werkstoff geformt wird, während ein zweites der Sperrklinkenelemente aus einem zweiten Werkstoff geformt wird, der andere physikalische und/oder chemische Eigenschaften als der erste Werkstoff aufweist.

7. Rückwärtsbewegungsfreie Vorrichtung nach Anspruch 6, **dadurch gekennzeichnet, dass** die Sperrklinkenelemente mittels einer Spindel oder dergleichen an einem festen Teil der rückwärtsbewegungsfreien Vorrichtung angebracht sind und die Spindel eines Sperrklinkenelementes eine andere Größe oder Form als die des anderen Sperrklinkenelementes aufweist.

8. Rückwärtsbewegungsfreie Vorrichtung nach einem der vorhergehenden Ansprüche, **dadurch gekennzeichnet, dass** das erste Klinkenradelement (12) gegenüber dem zweiten Klinkenradelement (14) um einen Winkel versetzt ist.

9. Rückwärtsbewegungsfreie Vorrichtung nach Anspruch 8, das einen Sensor (41) zum Bereitstellen eines Warnsignals, dass die Sperrklinke mit dem ersten Klinkenradelement zusammenwirkt, umfasst.

10. Rückwärtsbewegungsfreie Vorrichtung nach Anspruch 9, **dadurch gekennzeichnet, dass** der Sensor einen Dehnungsmessstreifen umfasst, der mit dem ersten Klinkenradelement zusammenwirkt.

11. Rückwärtsbewegungsfreie Vorrichtung nach Anspruch 9, **dadurch gekennzeichnet, dass** der Sensor einen elektrischen Schalter umfasst (46), der sich durch das erste Klinkenradelement betätigen lässt, wenn das erste Klinkenradelement mit der Sperrklinke zusammenwirkt.

## Revendications

1. Dispositif anti-entraînement arrière comprenant un premier et un second éléments à rochet (12, 14) pouvant être connectés à un élément rotatif de manière à pouvoir tourner avec celui-ci et au moins un élément de cliquet (22, 24) pouvant se mettre en prise avec au moins un desdits éléments à rochet, et **caractérisé par le fait que** ledit premier et ledit second éléments à rochet sont formés dans des matériaux respectifs ayant des propriétés chimiques et/ou physiques différentes, les premier et second éléments à rochet (12, 14) étant joints l'un à l'autre de manière fixe pour empêcher une rotation relative entre eux.

2. Dispositif anti-entraînement arrière selon la revendication 1, **caractérisé par le fait que** ledit au moins un élément de cliquet (22, 24) est disposé de manière à permettre la rotation des premier et second éléments à rochet dans une direction mais à empêcher essentiellement la rotation d'au moins un des éléments à rochet dans la direction opposée.

3. Dispositif anti-entraînement arrière selon la revendication 1 ou la revendication 2, **caractérisé par le fait que** les premier et second éléments à rochet (12, 14) sont pourvus de moyens de verrouillage respectifs (18, 20) pour assurer le verrouillage desdits éléments à rochet l'un avec l'autre afin d'empêcher ladite rotation relative.

4. Dispositif anti-entraînement arrière selon la revendication 3, **caractérisé par le fait que** l'un desdits éléments à rochet est pourvu d'une ou plusieurs saillie/s (18) sur une de ses surfaces tandis que l'autre élément à rochet est pourvu d'une ou plusieurs indentations correspondantes (20) permettant un enclenchement avec ladite/lesdites une ou plusieurs saillie/s.

5. Dispositif anti-entraînement arrière selon l'une quelconque des revendications précédentes, **caractérisé par le fait que** le dispositif anti-entraînement arrière inclut deux éléments de cliquet, chacun pouvant se mettre en prise avec au moins un des éléments à rochet.

6. Dispositif anti-entraînement arrière selon la revendication 5, **caractérisé par le fait qu'**un premier desdits éléments de cliquet est formé d'un premier matériau tandis qu'un second desdits cliquets est formé d'un second matériau ayant des propriétés physiques et/ou chimiques différentes de celles du premier matériau.

7. Dispositif anti-entraînement arrière selon la revendication 6, **caractérisé par le fait que** lesdits éléments de cliquet sont montés sur une partie fixe du dispositif anti-entraînement arrière au moyen d'un axe ou similaire et l'axe d'un élément de cliquet a une dimension ou forme différente de celle de l'autre élément de cliquet.

8. Dispositif anti-entraînement arrière selon l'une quelconque des revendications précédentes, **caractérisé par le fait que** le premier élément à rochet (12) présente un décalage angulaire par rapport au second élément à rochet (14).

9. Dispositif anti-entraînement arrière selon la revendication 8, comprenant un capteur (41) destiné à fournir un signal d'avertissement indiquant que ledit cliquet coopère avec le premier élément à rochet.

10. Dispositif anti-entraînement arrière selon la revendication 9, **caractérisé par le fait que** ledit capteur inclut une jauge de contrainte qui agit conjointement avec ledit premier élément à rochet.

11. Dispositif anti-entraînement arrière selon la revendication 9, **caractérisé par le fait que** ledit capteur inclut un interrupteur électrique (46) pouvant être actionné par ledit premier élément à rochet lorsque ledit premier élément à rochet agit conjointement avec ledit cliquet.
